# EUROPÄISCHE PATENTSCHRIFT

(11) **EP 0 370 330 B1**
(45) Veröffentlichungstag und Bekanntmachung des Hinweises auf die Patenterteilung: **08.09.1993**
(21) Anmeldenummer: 89120842.3
(22) Anmeldetag: 10.11.1989
(51) Int. Cl.: C08G 65/48, C08L 71/12

(54) **Thermoplastische Formmassen auf Basis von triazolindionmodifizierten Polyphenylenethern**
Thermoplastic moulding compositions based on triazolindione-modified polyphenylene ethers
Masses à mouler thermoplastiques à base de polyphénylène éthers modifiés par la triazoline-dione

(30) Priorität: 19.11.1988 DE 19883839231
(43) Veröffentlichungstag der Anmeldung: 30.05.1990
(73) Patentinhaber: BASF Aktiengesellschaft, D-67063 Ludwigshafen (DE)
(72) Erfinder: Ostermayer, Bertram, Dr., D-6900 Heidelberg (DE); Muehlbach, Klaus, Dr., D-6148 Heppenheim (DE); Baumgartner, Ehrenfried, Dr., D-6701 Roedersheim-Gronau (DE); Brandt, Hermann, Dr., Fort Mill South Carolina, 29715 (US); Feldmann, Heike, Dr., D-6800 Mannheim 1 (DE)

(56) Entgegenhaltungen:
- EP-0 338 425
- DE-3 812 946

## Beschreibung

Die Erfindung betrifft thermoplastische Formmassen auf Basis von modifizierten Polyphenylenethern (A) und schlagzähen Styrolpolymerisaten (B).

Solche Formmassen sind bereits beschrieben. So sind aus EP-A-226 055, EP-A-222 246 und WO-A-87/00540 Formmassen aus Styrolpolymerisat und Polyphenylenether bekannt, der mit säurefunktionellen Monomeren wie Maleinsäureanhydrid oder Maleinimiden modifiziert ist.

Es zeigte sich jedoch, daß die Eigenschaften solcher Formmassen noch verbesserungsbedürftig sind. Wünschenswert sind eine gute Spannungsrißbeständigkeit in Verbindung mit hoher Wärmeformbeständigkeit und multiaxialer Zähigkeit. In der DE-A-38 12 947 (EP-A-338425) werden Polyphenylenether beschrieben, die mit triazolindionhaltigen Verbindungen modifiziert sind.

Aufgabe der vorliegenden Erfindung war es, thermoplastische Formmassen auf Basis von modifizierten Polyphenylenethern und schlagzähen Styrolpolymerisaten bereitzustellen, die die Nachteile der bekannten Formmassen vermeiden.

Demgemäß wurden thermoplastische Formmassen auf Basis von modifizierten Polyphenylenethern (A) und schlagzähen Styrolpolymerisaten (B) gefunden, die dadurch gekennzeichnet sind, daß A aufgebaut ist aus
50 bis 99,95 Gew.% Polyphenylenether (a₁) und
0,05 bis 50 Gew.% einer Verbindung (a₂), die eine
1,2,4-Triazolin-3,5-diongruppe enthält.

Bevorzugte Ausführungsformen der Formmassen und ein Verfahren zu deren Herstellung sind den Unteransprüchen zu entnehmen.

Die erfindungsgemäßen Formmassen enthalten üblicherweise 10 bis 90, bevorzugt 25 bis 70 Gew.%, bezogen auf die Summe von A und B, eines modifizierten Polyphenylenethers A.

Unter "Modifizierung" soll eine durch die Umsetzung der Komponenten a₁ und a₂ hervorgerufene Veränderung des Polyphenylenethers a₁ verstanden werden.

Bei dieser Umsetzung wird der Polyphenylenether a₁ in Mengen von 50 bis 99,95, bevorzugt 75 bis 99,9 und insbesondere 80 bis 98 Gew.%, bezogen auf die Summe von a₁ und a₂, eingesetzt.

Als Basispolymere a₁ eignen sich bekannte Polyphenylenether (Houben-Weyl, Methoden der organischen Chemie, Band E20, (1987), S. 1380-1388), die nach üblichen Verfahren aus in ortho-Position durch Alkylgruppen disubstituierten Phenolen durch oxidative Kupplung hergestellt werden (vgl. US-A-3 661 848, 3 219 625, 3 378 505, 3 306 874, 3 306 875 und 3 639 656). Geeignete Polyphenylenether sind beispielsweise Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, außerdem Polymermischungen. Bevorzugt ist Poly(2,6-dimethyl-1,4-phenylen)ether. Die in einem solchen Verfahren hergestellten Polyphenylenether weisen im allgemeinen eine relative Viskosität von 0,3 bis 0,8, gemessen in 0,5 gew.%iger Lösung in CHCl₃ bei 25 ° C, auf.

Bei der Komponente a₂ kann es sich um 1,2,4-Triazolin-3,5-dion selbst oder um in 4-Stellung substituierte 1,2,4-Triazolin-3,5-dione der Formel I 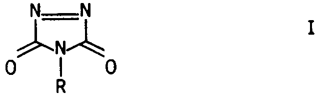 handeln.

Hierin kann R stehen für einen Alkyl-, Cycloalkyl-, Aryl-, Aralkyl- oder Alkylarylrest mit bis zu 25 C-Atomen, einen 5- bis 8-gliedrigen Heterocyclus mit Stickstoff, Sauerstoff oder Schwefel als Heteroatom oder für NR¹R², wobei R¹ und R² C₁-C₄-Alkylgruppen und insbesondere Wasserstoff sind.

R kann gegebenenfalls auch einen Alkenyl- oder Alkinylrest mit 2 bis 25 C-Atomen darstellen.

Ganz allgemein wird als R ein Rest bevorzugt, der bis zu 15 C-Atome enthält.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl. Substituierte Arylreste sind Alkylaryl-, Cycloalkylaryl-, arylsubstituierte Alkylaryl- und arylsubstituierte Aryl-Reste.

Beispiele für Alkylarylreste sind o-, p- und m-Tolyl, 2,6- und 2,4-Dimethylphenyl, Trimethylphenyl, o-, p-und m-Isopropylphenyl, Nonylphenyl, p-tert-Butylphenyl, 2,4-Diisopropylphenyl und Triisopropylphenyl.

Ein Beispiel für einen Cycloalkarylrest ist o-Cyclohexylphenyl. Beispiele für arylsubstituierte Alkylarylreste sind p-Benzylphenyl und p-Phenethylphenyl.

Ein Beispiel für ein arylsubstituiertes Aryl ist Diphenyl.

Bevorzugte Reste R sind Phenyl, o-, m-, p-Tolyl und 2,6-Dimethylphenyl, 2,7-Diisopropylphenyl und Triisopropylphenyl.

Besonders bevorzugt werden 4-Methyl- und 4-Phenyl-1,2,4-triazolin-3,5-dion.

Der Rest R kann seinerseits durch ein oder mehrere funktionelle Gruppen substituiert sein. Beispiele für geeignete funktionelle Gruppen sind Halogen-, Nitril-, Ether-, Nitro-, phenolische OH-, Carbonsäureester-, Carbonsäurehalogenid-, Carbonsäureamid-, Säureanhydrid-, Imid-, Lactam-, Epoxy-, Urethan-, Oxazolin-, Carbonyl-, Thioether-, Sulfonsäureester-, Phosphat- und Aminogruppen; geeignet sind auch Salze von Carboxylgruppen. Beispielhaft seien als R der 4-Hydroxy-3-nitrophenyl- und der 4-Carboxymethylphenylrest genannt.

Daneben ist es auch möglich, als Rest R UV- oder Hitze-Stabilisatoren, wie Derivate des 2,2,4,4-Tetramethylpiperidins oder Benzotriazol (z.B. 2-(2-Hydroxy-5-methylphenyl)-benzotriazol, Antioxidantien wie sterisch gehinderte Phenole (z.B. 2,6-Di-tert.-butylphenol oder 2,6-Di-tert.-butyl-para-Kresol), Thioether oder Phosphite (z.B. Tri(2,4-di-tert.-butylphenyl)phosphit), Flammschutzmittel wie halogenhaltige Flammschutzmittel (z.B. Derivate des Tetrabrombisphenol A, des Tetrabromphthalimids bzw. -säureanhydrids, bromierte Biphenylether oder bromierte Phenole), phosphorhaltige Flammschutzmittel wie Phosphate und Phosphinoxide (z.B. Triphenylphosphat oder -phosphinoxid) oder Derivate des Melamins (z.B. Melamincyanurat), Farbstoffe wie Antrachinonfarbstoffe, Antistatika wie Salze von Carbonsäuren oder Sulfonsäuren (z.B. langkettige aliphatische Sulfonsäuresalze), quartäre Ammoniumsalze, oligomere oder polymere Ether des Ethylenglykols bzw. Propylenglykols, mesogene Seitengruppen, wie sie in DE-A 36 31 841 beschrieben sind (z.B. Alkoxy-4'-methoxybiphenyl), oder einen anderen Wirkstoff einzusetzen, um diese über die 1,2,4-Triazolin-3,5-dion-Gruppe mit dem Polyphenylenether a₁ zu verknüpfen.

Die Substituenten R müssen, was sich allerdings von selbst versteht, so beschaffen sein, daß sie die Modifizierungsreaktion nicht verhindern.

Weiterhin kann die Modifizierung auch mit mehr als eine 1,2,4-Triazolin-3,5-dion-Gruppe tragenden Molekülen erfolgen. Dies führt im allgemeinen zu verzweigten bzw. vernetzten Polymeren. Bevorzugt sind Komponenten der Struktur II 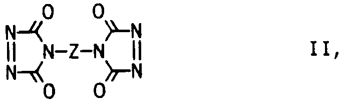 wobei Z ein Brückenglied ist.
Als Z gut geeignet ist
-(CH₂)ₙ- mit n = 1 bis 8, 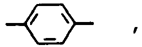 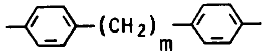 mit m = 2 bis 8, bevorzugt 1 und

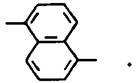

Ferner kann Z auch 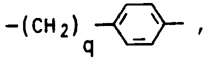 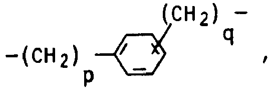 -(CH₂)₂O(CH₂)₂- , 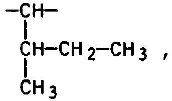 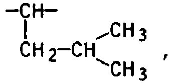 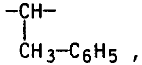 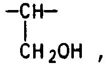 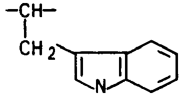 und 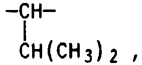 wobei p und q 1 bis 20 sind, sein.

Die Komponente a₂ ist allgemein bekannt. Sie kann beispielsweise gemäß DE-A-32 44 657 und DE-A-27 04 330 bzw. J.C. Stickler, W.H. Pirkle, J. Org. Chem., 31, 3444-45 (1966) bzw. J.A. Moore, R. Muth, R. Sorace, J. Org. Chem. 39, 3799 (1974) hergestellt werden.

Die Umsetzung der Komponenten a₁ und a₂ erfolgt entweder in Substanz, d.h. in der Schmelze von a₁, oder vorzugsweise in Lösung bzw. einer Suspension von a₁ in einem Lösungsmittel für die Komponente a₂. Man sorgt im allgemeinen durch Rühren für eine gute Durchmischung der Reaktionspartner.

Für die Umsetzung besonders geeignete Lösungsmittel sind solche, die sowohl a₁ als auch a₂ lösen, ohne die Modifizierung zu stören. Geeignete Lösungsmittel sind beispielsweise aromatische und chlorierte Kohlenwasserstoffe, Tetrahydrofuran, Ethylacetat oder Dimethylformamid.

Die Umsetzung kann in einem weiten Temperaturbereich von -50 ° C bis zum Siedepunkt des entsprechenden Lösungsmittels, vorzugsweise zwischen -20 ° C und +80 ° C durchgeführt werden.

Die Modifizierung des Polyphenylenethers kann auch direkt im Anschluß an die Herstellung des Polyphenylenethers vorgenommen werden. Hierzu wird die den Polyphenylenether enthaltende Polymerisationslösung mit der Komponente a₂ versetzt und nach abgeschlossener Umsetzung aufgearbeitet, um den modifizierten Polyphenylenether zu isolieren. Mit dieser Methode werden gute Erfolge erzielt.

Die erfindungsgemäßen Formmassen enthalten üblicherweise 10 bis 90, bevorzugt 30 bis 75 Gew.%, bezogen auf die Summe von A und B, eines schlagzähen Styrolpolymerisates B.

Als schlagzähe Styrolpolymerisate B sind die im folgenden beschriebenen kautschukmodifizierten Styrolpolymerisate gut geeignet.

Als Styrolpolymerisate kommen bekannte Homo- und Copolymerisate des Styrols in Betracht. Sie werden überwiegend aus Styrol, ferner aus mit C₁-C₄-Alkyl kern- oder seitenkettenalkylierten Styrolen wie α-Methylstyrol oder p-Methylstyrol hergestellt. Sie können ferner noch bis zu 20 Gew.%, bezogen auf das Polymerisat, Monomere wie Methacrylsäureester, Acrylsäureester wie Methylmethacrylat oder Ethylmethacrylat, Butylacrylat oder 2-Ethylhexylacrylat sowie Methacrylamide oder Gemische dieser Verbindungen einpolymerisiert enthalten.

Diese Polymerisate werden in üblicher Weise in Lösung oder Masse kontinuierlich oder diskontinuierlich hergestellt. Die Durchschnittsmolekulargewichte der ungepfropften Polymerisate (Gewichtsmittel M̅_{w}) liegen im allgemeinen zwischen 50000 und 500 000.

Die Schlagzähmodifizierung kann durch Zumischen von geringen Mengen, beispielsweise von 2 bis 20 Gew.%, bezogen auf das Styrolpolymerisat, eines Kautschuks erreicht werden. Der Kautschuk sollte eine Glastemperatur von unter -20 ° C, gemessen nach K.H. Illers und H. Breuer, Kolloid Zeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, Polybutylenkautschuk, Polyoctenamerkautschuk, lonomere, Styrolbutadienblockcopolymereeinschließlich AB-, ABA-, ABAB-Block-Copolymeren mit scharfen oder verschmierten Blockgrenzen, wobei die aliphatischen Doppelbindungen teilweise oder vollständig hydriert sein können, Stern-Block-Copolymere und ähnliche, analoge Isoprenblockpolymerisate, und insbesondere Blockcopolymere, wie sie an sich aus EP-A 62 283 bekannt sind. Geeignet sind ebenfalls EPM- und EPDM-Kautschuke. Derartige synthetische Kautschuke sind dem Fachmann geläufig und beispielsweise in "Ullmanns Encyklopädie der technischen Chemie", 4. Auflage, Band 13, Seiten 595 bis 634, Verlag Chemie GmbH, 1977, beschrieben.

Die Schlagzähmodifizierung kann in bevorzugter Weise auch dadurch bewerkstelligt werden, daß die Styrolpolymerisate aus den oben genannten Monomeren in Gegenwart kleinerer Mengen, zum Beispiel 2 bis 20 Gew.% bezogen auf das Styrolpolymerisat, eines der genannten Kautschuke in üblicher Weise in Masse, Lösung, Suspension oder Masse/Suspension hergestellt werden, wie es beispielsweise in der US-A-2 694 692 oder US-A-2 862 906 beschrieben ist. Solche schlagzäh modifizierten Styrolpolymerisate sind allgemein bekannt, z.B. aus Ullmanns Encyklopädie der technischen Chemie, Bd. 19, Weinheim 1980, S. 265-277).

Über diese Komponenten A und B hinaus können die erfindungsgemäßen Formmassen weiterhin bekannte Zusätze in üblichen Mengen enthalten. Genannt seien Verstärkungsmittel wie Glasfasern, Glaskugeln, Mineralfasern, Aluminiumoxidfasern, Glimmer, Metallflocken, Gipsfasern, synthetische Calciumsilikate, Kaolin, kalziniertes Kaolin, Talkum, Kreide oder Wollastonit.

Als weitere Zusatzstoffe seien genannt übliche Hitze- und Lichtstabilisatoren, Gleit- und Entformungsmittel und Färbemittel wie Farbstoffe und Pigmente. Ferner seien Flammschutzmittel genannt, insbesondere phosphorhaltige, wie Phosphorsäurealkylester und Phosphinoxide. Gute Flammhemmung wird mit Triphenylphosphat oder Triphenylphosphinoxid erzielt.

Die erfindungsgemäßen thermoplastischen Formmassen erhält man zweckmäßig durch Mischen der Einzelkomponenten bei Temepraturen von 200 bis 320 ° C, bevorzugt 250 bis 300 ° C, in üblichen Mischvorrichtungen wie Knetern, Banburrymischern und Einschneckenextrudern, vorzugsweise jedoch in einem Zweischneckenextruder. Um eine möglichst homogene Formmasse zu erhalten, ist eine intensive Durchmischung notwendig. Die mittlere Verweilzeit beim Mischen liegt üblicherweise zwischen 0,5 und 30, bevorzugt zwischen 1 und 5 Minuten. Werden mehr als 2 Komponenten eingesetzt, kann die Abmischreihenfolge der Komponenten variiert werden, so können 2 oder ggf. 3 Komponenten vorgemischt sein, es können auch alle Komponenten gemeinsam gemischt werden.

Aus den erfindungsgemäßen thermoplastischen Formmassen lassen sich durch Spritzgießen oder Extrusion Formkörper mit vorteilhaften thermoplastischen und mechanischen Eigenschaften, insbesondere einer ausgewogenen Eigenschaftskombination aus guter Schlagzähigkeit, Wärmeformbeständigkeit, Spannungsrißbeständigkeit und heller Eigenfarbe herstellen.

### Beispiele und Vergleichsversuche

Die Herstellung der im folgenden verwendeten in 4-Stellung substituierten 1,2,4-Triazolin-3,5-dione erfolgte durch Oxidation der entsprechenden 1,2,4-Triazolidin-3,5-dione mit N₂O₄ gemäß dem Beispiel 2 der DE-A-27 04 330.

### Komponente A

### A(1)

5 kg Poly-(2,6-dimethyl-1,4-phenylen)ether mit einer relativen Viskosität von 0,5, gemessen in 0,5 gew.%iger Lösung in Chloroform bei 25 ° C, (PPE) wurden in 30 kg Ethylbenzol gelöst und mit 250 g 4-Phenyl-1,2,4-triazolin-3,5-dion in 2,5 l Methylenchlorid bei 0 ° C versetzt und bei 30 ° C 4 h gerührt. Das Polymere wurde durch Fällen in Methanol isoliert.

### A(2)

Es wurde wie in Beispiel 1 verfahren, jedoch wurden 5 kg PPE mit 1 kg 4-Methyl-1,2,4-triazolin-3,5-dion versetzt.

### A(V1)

Poly-(2,6-dimethyl-1,4-phenylen)ether mit einer relativen Viskosität von 0,5 dl/g, gemessen in 0,5 gew.%iger Lösung in Chloroform bei 25 ° C.

### A(V2)

9,7 kg PPE und 0,3 kg Maleinsäureanhydrid wurden in einem Zweischneckenextruder bei 270 ° C miteinander umgesetzt und anschließend in einer Entgasungszone bei 280 ° C bei vermindertem Druck entgast. Die mittlere Verweilzeit im Extruder betrug 3 Minuten. Die Schmelze wurde zur Kühlung durch ein Wasserbad geleitet, granuliert und getrocknet.

### A(V3)

Es wurde wie bei A(V2) verfahren, jedoch wurden 9,5 kg PPE mit 0,5 kg N-Phenylmaleinimid umgesetzt.

### Komponente B

### B(1)

Schlagfestes Polystyrol 576 M der BASF Aktiengesellschaft mit einem Gehalt von 8 Gew.% Butadien.

### B(2)

Schlagfestes Polystyrol 586 G der BASF Aktiengesellschaft mit einem Gehalt von 10 Gew.% Butadien.

Die in Tabelle 1 angegebenen Komponenten wurden mit jeweils 0,8 kg Tris(nonylphenyl)phosphit und 1,5 kg Polyethylen auf einem 2-Wellen-Extruder bei 280 ° C geschmolzen, homogenisiert, gemischt und granuliert.

Die in Tabelle 2 genannten Parameter wurden an bei 280 ° C spritzgegossenen Prüfkörpern wie folgt bestimmt: die Vicattemperatur VST/B nach DIN 53 460 und die Durchstoßarbeit DSTA nach DIN 53 443.

Die Spannungsrißbeständigkeit wurde nach DIN 53 449 TI. 1 ermittelt. Verwendet wurden Probekörper, die für die Dauer einer Stunde in Isopropanol gelagert wurden. Als Indikationseigenschaften dienten Zugfestigkeit und Reißdehnung gemäß DIN 53 455.

**Tabelle 1**

| Beispiele und Vergleichsbeispiele | Zusammensetzung der Formmassen | | | |
|---|---|---|---|---|
| | Art | Menge [kg] | Art | Menge [kg] |
| 1 | A(1) | 4,5 | B(1) | 5,5 |
| 2 | A(2) | 3,0 | B(2) | 7,0 |
| 3 | A(1) | 5,5 | B(2) | 4,5 |
| 3* | A(V2) | 5,5 | B(2) | 4,5 |
| 4 | A(2) | 6,5 | B(1) | 3,5 |
| 4* | A(V3) | 6,5 | B(1) | 3,5 |

| | | | | |
|---|---|---|---|---|
| *) nicht erfindungsgemäß | | | | |

**Tabelle 2**

| Beispiele und Vergleichsbeispiele | Eigenschaften | | | |
|---|---|---|---|---|
| | Vicat/B [°C] | DSTA [Nm] | Rißgrenze U_{R} (*µ*m) | |
| | | | Zugfestigkeit | Reißdehnung |
| 1 | 136 | 45 | > 500 | > 500 |
| 2 | 124 | 38 | > 500 | > 500 |
| 3 | 151 | 52 | > 500 | > 500 |
| 3* | 147 | 15 | 130 | 140 |
| 4 | 156 | 63 | > 500 | > 500 |
| 4* | 151 | 12 | 80 | 90 |

| | | | | |
|---|---|---|---|---|
| *) nicht erfindungsgemäß | | | | |

## Patentansprüche

1. Thermoplastische Formmassen auf Basis von modifizierten Polyphenylenethern (A) und schlagzähen Styrolpolymerisaten (B), **dadurch gekennzeichnet, daß** A aufgebaut ist aus
50 bis 99,95 Gew.% Polyphenylenether (a₁) und
0,05 bis 50 Gew.% einer Verbindung (a₂), die eine 1,2,4-Triazolin-3,5-diongruppe enthält.

2. Formmasse nach Anspruch 1, enthaltend als wesentliche Komponenten
10 bis 90 Gew.% A und
10 bis 90 Gew.% B.

3. Formmassen nach Anspruch 1 oder 2, in denen A aufgebaut ist aus
75 bis 99,9 Gew.% a₁ und
0,1 bis 25 Gew.% a₂.

4. Formmassen nach mindestens einem der Ansprüche 1 bis 3, in denen a₁ Poly(2,6-dimethyl-1,4-phenylen)ether ist.

5. Formmassen nach mindestens einem der Ansprüche 1 bis 4, in denen a₂ 4-Phenyl-1,2,4-triazolin-3,5-dion ist.

6. Formmassen nach mindestens einem der Ansprüche 1 bis 4, in denen a₂ 4-Methyl-1,2,4-triazolin-3,5-dion ist.

7. Verfahren zur Herstellung von Formmassen gemäß mindestens einem der Ansprüche 1 bis 6, **dadurch gekennzeichnet, daß** man den Polyphenylenether a₁ mit a₂ modifiziert und anschließend mit B vermischt.

8. Verwendung von Formmassen gemäß mindestens einem der Ansprüche 1 bis 6 oder hergestellt nach Anspruch 7 zur thermoplastischen Herstellung von Formkörpern.

## Claims

1. A thermoplastic molding composition based on modified polyphenylene ethers (A) and impact-resistant styrene polymers (B), wherein A is built up from
50 - 99.95% by weight of polyphenylene ether (a₁) and
0.05 - 50% by weight of a compound (a₂) that contains a 1,2,4-triazoline-3,5-dione group.

2. A molding composition as claimed in claim 1, containing as essential components
from 10 to 90% by weight of A and
from 10 to 90% by weight of B.

3. A molding composition as claimed in claim 1 or 2, in which A is built up from
75 - 99.9% by weight of a₁ and
0.1 - 25% by weight of a₂.

4. A molding composition as claimed in at least one of claims 1 to 3, in which a₁ is poly(2,6-dimethyl-1,4-phenylene) ether.

5. A molding composition as claimed in at least one of claims 1 to 4, in which a₂ is 4-phenyl-1,2,4-triazoline-3,5-dione.

6. A molding composition as claimed in at least one of claims 1 to 4, in which a₂ is 4-methyl-1,2,4-triazoline-3,5-dione.

7. A process for preparing molding compositions as claimed in at least one of claims 1 to 6, wherein the polyphenylene ether a₁ is modified with a₂ and is then mixed with B.

8. The use of molding compositions as claimed in at least one of claims 1 to 6 or prepared as claimed in claim 7, for the thermoplastic production of moldings.

## Revendications

1. Masses à mouler thermoplastiques à base de poly(oxyphénylène) modifiés (A) et de polymères de styrène résilients (B), **caractérisées en ce que** A est composé de
50 à 99,95% en poids de poly(oxyphénylène) (a₁) et de
0,05 à 50% en poids d'un composé (a₂) qui contient un groupement 1,2,4-triazoline-3,5-dione.

2. Masses à mouler selon la revendication 1, contenant, comme composants essentiels,
10 à 90% en poids de A et
10 à 90% en poids de B.

3. Masses à mouler selon la revendication 1 ou 2, dans lesquelles A est composé de
75 à 99,9% en poids de a₁ et de
0,1 à 25% en poids de a₂.

4. Masses à mouler selon l'une quelconque des revendications 1 à 3, dans lesquelles a₁ est le poly-(oxyde de 2,6-diméthyl-1,4-phénylène).

5. Masses à mouler selon l'une quelconque des revendications 1 à 4, dans lesquelles a₂ est la 4-phényl-1,2,4-triazoline-3,5-dione.

6. Masses à mouler selon l'une quelconque des revendications 1 à 4, dans lesquelles a₂ est la 4-méthyl-1,2,4-triazoline-3,5-dione.

7. Procédé de préparation de masses à mouler selon l'une quelconque des revendications 1 à 6, **caractérisé en ce qu'**on modifie par a₂ le poly(oxyphénylène) a₁, puis on le mélange à B.

8. Utilisation de masses à mouler selon l'une quelconque des revendications 1 à 6 ou préparées selon la revendication 7 pour la fabrication thermoplastique de corps moulés.
